(19) **Europäisches Patentamt / European Patent Office / Office européen des brevets**

(11) **EP 0 726 689 B1**

(12) **EUROPÄISCHE PATENTSCHRIFT**

(45) Veröffentlichungstag und Bekanntmachung des Hinweises auf die Patenterteilung:
**04.06.2008 Patentblatt 2008/23**

(51) Int Cl.:
**H04Q 7/38** *(2006.01)*

(21) Anmeldenummer: **96101150.9**

(22) Anmeldetag: **27.01.1996**

(54) **Mobilfunksystem und Verfahren zur Übergabe einer Funkverbindung**

Mobile radio-communication system and hand-off method

Système de communication radio-mobile et procédé de transfert d'appel

(84) Benannte Vertragsstaaten:
**DE ES FR GB IT SE**

(30) Priorität: **11.02.1995 DE 19504509**

(43) Veröffentlichungstag der Anmeldung:
**14.08.1996 Patentblatt 1996/33**

(73) Patentinhaber: **Alcatel Lucent**
**75008 Paris (FR)**

(72) Erfinder:
• **Hofbauer, Klaus**
**D-71263 Weil der Stadt (DE)**
• **Danne, Hermann**
**89077 Ulm (DE)**

(74) Vertreter: **Schätzle, Albin et al**
**Alcatel Lucent**
**Intellectual Property & Standards**
**70430 Stuttgart (DE)**

(56) Entgegenhaltungen:
**EP-A- 0 602 340**

• **ETSI TC-SMG: "EUROPEAN DIGITAL CELLULAR TELECOMMUNICATIONS SYSTEM (PHASE 2); RADIO SUBSYSTEM LINK CONTROL (GSM 05.08)" EUROPEAN TELECOMMUNICATION STANDARD, 1. Juli 1994, XP002092188**
• **MENDE W R: "EVALUATION OF A PROPOSED HANDOVER ALGORITHM FOR THE GSM CELLULAR SYSTEM" VEHICULAR TECHNOLOGY CONFERENCE, ORLANDO, MAY 6 - 9, 1990, Nr. CONF. 40, 6. Mai 1990, Seiten 264-269, XP000203819 INSTITUTE OF ELECTRICAL AND ELECTRONICS ENGINEERS**

**Beschreibung**

Die Erfindung betrifft ein zellulares Mobilfunksystem gemäß dem Oberbegriff des Anspruchs 1. Außerdem betrifft die Erfindung ein Verfahren zur Übergabe einer Funkverbindung eines ortsbeweglichen Teilnehmers gemäß dem Oberbegriff des Anspruchs 2 für ein zellulares Mobilfunksystem gemäß dem Oberbegriff des Anspruchs 1.

Ein zellulares Mobilfunksystem, das gemäß dem GSM-Standard arbeitet, ist z.B. aus dem Buch von Mouly, M. et al, "The GSM System for Mobile Communications", Eigenverlag 1992, (ISBN2-9507190-0-7) bekannt, vor allem aus Kapitel 2.1. Dort sind einzelne Systemkomponenten und deren Funktionen ausführlich erläutert. Dazu gehören Funkfeststationen, die auch als Basisstationen bezeichnet werden (Base Transceiver Stations, BTS), Funkfeststationssteuereinrichtungen (Base Station Controller, BSC), eine Mobilfunkvermittlungseinrichtung (Moble services Switching Centre, MSC) und mindestens eine Mobilstation (MS). Die Basisstationen und die Funkfeststationssteuereinrichtung bilden ein Funkfestsystem (Base Station Sub-System, BSS).

Wechselt eine Mobilstation z.B. während einer Gesprächsverbindung in einem zellularen Mobilfunksystem von einer Verkehrszelle (serving cell) in eine benachbarte Zielzelle (target cell), muß die Gesprächsverbindung an die Basisstation der benachbarten Zelle übergeben werden. Eine solche Übergabeprozedur ist auch als Handover bekannt und wird vor allem in Kapitel 6.1.4 und 6.3.4 für den GSM-Standard beschrieben. Dort gibt es auch einen Hinweis auf die Spezifikation GSM 05.08, in der ein Beispiel einer Übergabeprozedur angegeben ist (Anhang A von TS GSM 05.08 version 4.10.0: July 1994).

Gemäß dieser Spezifikation bestimmt die Funkfeststation der Verkehrszelle u.a. die Empfangsfeldstärke RXLEV_UL und die Empfangsqualität RXQUAL_UL eines von der Mobilstation ausgesendeten Funksignals (up-link). Außerdem bestimmt die Mobilstation Empfangsfeldstärken RXLEV_DL von empfangenen Funksignalen, die von der Funkfeststation der Verkehrszelle und von Funkfeststationen benachbarter Zellen ausgesendet werden (down-link). Die Mobilstation sendet die Werte der Empfangsfeldstärken in einem Signalisierungskanal, dem Slow Associated Control Channel (SACCH), zur Funkfeststation der Verkehrszelle.

Im Funkfestsystem BSS werden die bestimmten Werte RXLEV_UL, RXLEV_DL fortlaufend ausgewertet, z.B. alle 480 ms.

Im GSM-Standard ist desweiteren ein Leistungskriterium festgelegt, das als Power Budget (PBGT) bezeichnet ist, wodurch erkannt werden kann, ob es eine "bessere Zelle" als die momentane gibt. Dieses Leistungskriterium wird alle 480 ms für jede Funkverbindung und für maximal 32 Nachbarzellen (n) bestimmt. Als Gleichung ausgedrückt, ist das Leistungskriterium der Zelle n

$$\text{PBGT(n)} = (\text{Min}(\text{MS\_TXPWR\_MAX}, P) - \text{RXLEV\_DL} - \text{PWR\_C\_D}) - (\text{Min}(\text{MS\_TXPWR\_MAX}(n), P) - \text{RXLEV\_NCELL}(n))$$

mit

| | |
|---|---|
| PWR_C_D: | Differenz zwischen der maximal in der Zelle erlaubten down-link Sendeleistung und der momentanen down-link Sendeleistung, die aufgrund der BSS-Leistungskontrolle eingestellt ist, |
| MS_TXPWR_MAX: | Maximal in einem Verkehrskanal der Verkehrszelle erlaubte Sendeleistung einer Mobilstation, |
| MS_TXPWR_MAX(n): | Maximal in einem Verkehrskanal der Zelle n erlaubte Sendeleistung einer Mobilstation, |
| P: | Maximale Sendeleistung der Mobilstation, |
| RXLEV_NCELL(n): | Down-link Empfangsfeldstärke von Funksignalen der n-ten Nachbarzelle. |
| HO_MARGIN(n): | Schwellenwert für eine Übergabe zur n-ten Nachbarzelle. |

Eine Übergabe der Funkverbindung erfolgt u.a. dann, wenn RXLEV_NCELL(n) > RXLEV_MIN(n). Das Leistungskriterium PBGT ist dann erfüllt, wenn für mindestens eine Nachbarzelle gilt: PBGT(n) > HO_MARGIN(n).

Die Nachbarzellen werden vom Funkfestsystem u.a. nach der Größe des Terms (PBGT(n) - HO_MARGIN(n)) sortiert und in eine Liste eingetragen. Die Nachbarzelle an erster Stelle dieser Liste ist die Zielzelle.

Es gibt zur Zeit Überlegungen, den Streckenfunk für schienengebundenen Verkehr (Eisenbahn) entsprechend Funksystemen, die nach dem GSM-Standard arbeiten, zu realisieren. Einen Überblick über Streckenfunksysteme gibt Francois de Roulet, in "Streckenfunk: Europas unterschiedliche Systeme", ascom Technische Mitteilung, 3/4, 1991, Seiten 33 bis 37.

Mit dem Streckenfunk wird eine Sprach- und Datenverbindung zwischen dem fahrenden Zug und den Bahnhöfen sowie den zentralen Leitstellen ermöglicht. Er dient somit der Lenkung des Zugverkehrs. Zunehmend wird der Streckenfunk auch als Datennetzwerk zwischen einem Rechner im Zug und dem der Leitstelle benutzt.

In einem Streckenfunksystem sind u.a. mindestens eine Mobilstation (ortsbeweglicher Teilnehmer) vorhanden. Die Mobilstation, die im Triebwagen des Zuges eingebaut ist, besteht aus einem Sender/Empfänger mit Steuerlogik und bis zu zwei Bediengeräten. Bei modernen Zügen wird die Mobilstation mit einem Bordrechner verbunden, wobei mehrere Schnittstellen für Daten- und Sprachendgeräte vorgesehen sind.

Die Basisstationen entlang der Bahnlinie bilden einen Teil der Infrastruktur; sie garantieren eine optimale Funkversorgung der Züge.

In der genannten Veröffentlichung (Roulet) ist außerdem erwähnt, daß die geplante Anwendung der GSM-Struktur auf das Bahnfunknetz nicht unproblematisch ist, da der GSM-Standard nicht für Geschwindigkeiten von 250 km/h und mehr ausgelegt ist.

EP 602 340 offenbart eine Methode zur Übergabe von Funkverbindungen in ein GSM System für schnell bewegenden Teilnehmen (z.B. Bahnverkehr).

Bei hohen Geschwindigkeiten besteht die Gefahr, daß die Gesprächsverbindung während der Übergabeprozedur unterbrochen wird.

Der Erfindung liegt die Aufgabe zugrunde, ein zellulares Mobilfunksystem und ein Verfahren zur Übergabe einer Funkverbindung anzugeben, die für sich sehr schnell bewegende Teilnehmer geeignet ist, ohne daß die Funkverbindung unterbrochen wird. Ein die Aufgabe lösendes zellulares Mobilfunksystem ist Gegenstand des Patentanspruchs 1 und ein die Aufgabe lösendes Verfahren zur Übergabe ist Gegenstand des Patentanspruchs 2.

Ein Vorteil der Erfindung ist, daß die Basisstationen in einem Streckenfunksystem in einem größeren Abstand voneinander angeordnet sein können, wodurch Basisstationen eingespart werden. Dadurch werden die Kosten des Streckenfunksystems reduziert.

Ein weiterer Vorteil ist, daß unnötige Übergaben und hin- und herschwingende Übergaben vermieden werden.

Da es, wie bereits erwähnt, Bestrebungen gibt, nach dem GSM-Standard arbeitende Streckenfunksysteme zu schaffen, ist es Ziel der Erfindung, Lösungen der genannten Aufgabe anzugeben, die sich weitgehend an diesem Standard orientieren.

Die Erfindung wird im folgenden beispielhaft anhand von Figuren näher erläutert. Es zeigen:

Fig. 1    schematisch einen Teil eines zellularen Mobilfunksystems mit zwei Funkfeststationen BTS1, BTS2 und einem ortsbeweglichen Teilnehmer MS, und

Fig. 2    eine Darstellung eines Verfahrens zur Übergabe einer Funkverbindung.

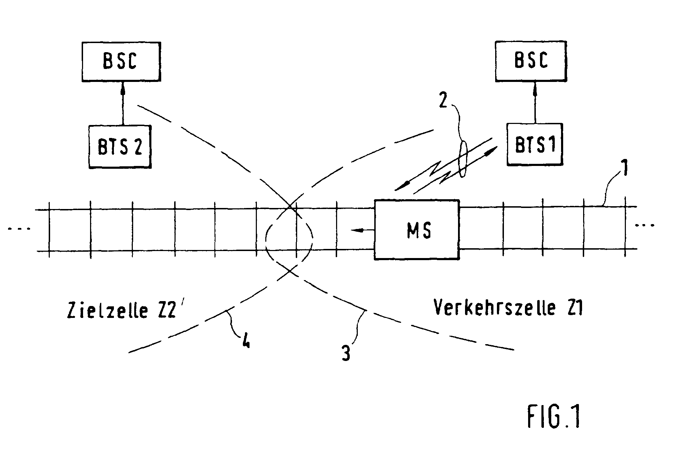

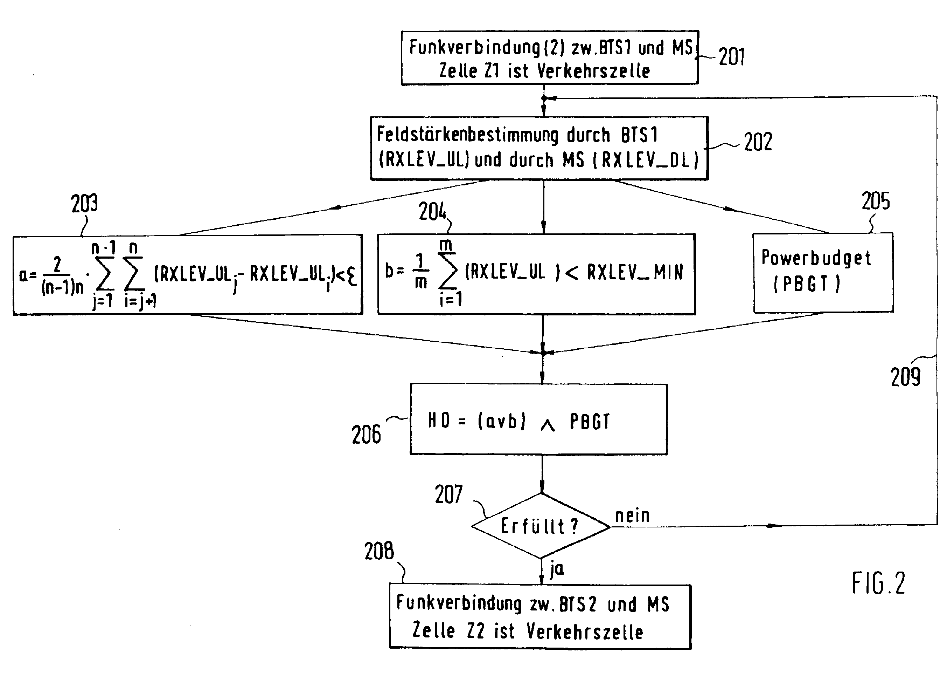

In Fig. 1 ist zum besseren Verständnis des in Fig. 2 gezeigten Verfahrens zur Übergabe einer Funkverbindung schematisch ein Teil eines an sich bekannten zellularen Mobilfunksystems gezeigt, dessen Struktur und Funktionsweise z.B. gemäß dem GSM-Standard ausgelegt ist. Der gezeigte Teil des zellularen Mobilfunksystems hat zwei Funkfeststationen BTS1, BTS2 und einen ortsbeweglichen Teilnehmer MS. Die beiden Funkfeststationen BTS1, BTS2 sind an eine Funkfeststationssteuereinrichtung BSC angeschlossen; sie können an eine gemeinsame oder an unterschiedliche Funkfestsstationssteuereinrichtungen BSC angeschlossen sein. Die Funkfeststation BTS1, BTS2 und die Funkfeststationssteuereinrichtung BSC stellen ein Funkfestsystem dar, das z.B. an eine gemeinsame Mobilfunkvermittlungseinrichtung angeschlossen ist. Der ortsbewegliche Teilnehmer MS bewegt sich entlang einer festgelegten Stecke 1 von einer Zelle Z1 auf eine Zelle Z2 zu. Die Zelle Z1 wird im folgenden "Verkehrszelle" genannt, weil die Beschreibung der Erfindung von dem Zustand ausgeht, daß der ortsbewegliche Teilnehmer mit dieser Zelle in Nachrichtenverbindung steht. Die Zelle Z2 wird im folgenden "Zielzelle" genannt, weil sich der ortsbewegliche Teilnehmer MS auf diese Zelle zubewegt. Die Bewegungsrichtung des ortsbeweglichen Teilnehmers MS ist durch einen Pfeil angedeutet. Der ortsbewegliche Teilnehmer ist z.B. ein Hochgeschwindigkeitszug, in dessen Triebwagen sich eine Mobilstation befindet, an die mehrere Endgeräte angeschlossen sind. Der ortsbewegliche Teilnehmer MS wird im folgenden als Mobilstation bezeichnet.

In Fig. 1 überlappen sich die Verkehrszelle Z1 und die Zielzelle Z2, was durch zwei Zellgrenzen 3, 4 angedeutet ist, durch die die Strecke 1, z.B. eine Gleisstrecke, führt. Jede Zelle Z1, Z2 wird von einer Funkfeststation, im folgenden Basisstation BTS1, BTS2 genannt, versorgt: Die Verkehrszelle Z1 wird durch die Basisstation BTS1 versorgt und die Zielzelle Z2 durch die Basisstation BTS2. An jeder Basisstation BTS1, BTS2 ist mindestens eine Antenne vorhanden, deren Abstrahl- und Empfangseigenschaft so gewählt wurde, daß die Zellen Z1, Z2 entlang der Strecke 1 stark gestreckt sind. In der Fig. 1 ist dies durch sich überlappende spitze Abschnitte eines Ovals angedeutet.

Die Verkehrszelle Z1 ist die Zelle, deren Funkfeststation BTS1 die Mobilstation MS momentan zugeordnet ist, d.h. zwischen der Mobilstation MS und der Basisstation BTS1 der Verkehrszelle Z1 besteht z.B. eine Gesprächsverbindung, wenn der Zugführer mit der Leitstelle im Bahnhof spricht. Dafür ist ein Zeitschlitz (Kanal) eines TDMA-Rahmens vorgesehen. Hat der Rahmen acht (sechzehn) Kanäle, können gleichzeitig acht (sechzehn) Gesprächs- oder Datenverbindungen bestehen. Diese maximal acht (sechzehn) Verbindungen werden im folgenden als eine Funkverbindung 2 bezeichnet. In der Fig. 1 ist diese Funkverbindung 2 zwischen der Mobilstation MS und der Basisstation BTS eingezeichnet. Die Angaben in den Klammern beziehen sich auf sogenannte Halbratenkanäle.

Bei dem im vorhergehenden beschriebenen zellularen Mobilfunksystem erfolgt eine Übergabe der Funkverbindung 2 von der Basisstation BTS1 zur Basisstation BTS2 erfindungsgemäß früher als bei dem bekannten Übergabeverfahren (s. GSM 05.08) und früher als unbedingt notwendig. Entscheidungskriterien dafür, wann diese vorzeitige Übergabe der Funkverbindung 2 erfolgen soll, werden in Zusammenhang mit dem in Fig. 2 dargestellten Verfahren zur Übergabe der Funkverbindung 2 erläutert.

Das in Fig. 1 gezeigte zellulare Mobilfunksystem ist an dieses Verfahren angepaßt, d.h. in den Basisstationen BTS1, BTS2 und in den Funkfeststationsteuereinrichtungen BSC ist ein Algorithmus für das Verfahren zur Übergabe der Funkverbindung 2 implementiert.

In Fig. 2 ist eine Darstellung des Verfahrens zur Übergabe der Funkverbindung 2 gezeigt. Das Verfahren ist in neun Schritte 201 - 209 aufgeteilt, die im folgenden näher erläutert werden.

Der Schritt 201 stellt einen Ausgangszustand dar, bei dem die Funkverbindung 2 zwischen der Basisstation BTS1 und der Mobilstation MS besteht und die Zelle Z1 die Verkehrszelle ist. Während der Funkverbindung 2 wird von der Basisstation BTS1 der Verkehrszelle Z1 regelmäßig (alle 480 ms) eine (up-link) Empfangsfeldstärke $RXLEV\_UL_i$, i = 1, 2, ..., eines von der Mobilstation MS ausgesendeten Funksignals bestimmt und in einem Register gespeichert, wobei es sich für i = 1 um den jeweils neuesten Wert handelt. Die Indizes der bisherigen Meßwerte werden jeweils um 1 erhöht, der älteste von insgesamt 32 Meßwerte geht verloren. Ebenfalls während dieser Funkverbindung 2 werden von der Mobilstation MS regelmäßig (down-link) Empfangsfeldstärken $RXLEV\ DL_i$, i = 1, 2, ..., von empfangenen Funksignalen bestimmt, d.h. das von der Basisstation BTS1 der Verkehrszelle Z1 ausgesendete Funksignal der Funkverbindung 2 und von benachbarten Basisstationen ausgesendete Funksignale, die der Signalisierung (z.B. SACCH) dienen. Die Werte der so bestimmten Empfangsfeldstärken $RXLEV\_DL_i$ werden von der Mobilstation MS zur Basisstation BTS1 der Verkehrszelle Z1 gesendet. Im Funkfestsystem werden daraufhin in den zeitlich parallelen Schritten 203 - 205 angegebene Kriterien (a, b, BPGT) berechnet.

Das im Schritt 203 angegebene Richtungskriterium a bestimmt die Bewegungsrichtung der Mobilstation MS bezüglich der Basisstation BTS1 der Verkehrszelle Z1, d.h. ob sich die Mobilstation MS auf die Basisstation BTS1 der Verkehrszelle Z1 zu- oder wegbewegt. Als Gleichung ergibt sich für das Richtungskriterium

$$a = \frac{2}{(n-1)} \cdot \sum_{j=1}^{n \cdot 1} \sum_{i=j+1}^{n} (RXLEV\_UL_j - RXLEV\_UL_i).$$

Die Summanden der Doppelsumme sind die Differenzen der (up-link) Empfangsfeldstärken $RXLEV\_UL_i$ von jeweils zwei der n aufeinander folgenden Meßwerte; diese Differenzen werden z.B. für n = 32 Meßwerte addiert und durch ihre Anzahl (½ (n-1) • n) dividiert, so daß das Richtungskriterium a die gemittelte Differenz der (up-link) Empfangsfeldstärken ist. Das Richtungskriterium a muß eine Bedingungen a < (mit < 0) erfüllen. Das bedeutet, daß das Richtungskriterium a nur dann "wahr" ist, wenn die (up-link) Empfangsfeldstärke $RXLEV\_UL_i$ deutlich abnimmt. In diesem Fall bewegt sich die Mobilstation MS mit einer hohen Geschwindigkeit von der Basisstation BTS1 der Verkehrszelle Z1 weg.

Im Schritt 204 ist ein weiteres Kriterium b angegeben, das für sich langsam bewegende, stehende oder die Bewegungsrichtung ändernde Mobilstationen MS gültig ist, also für den Fall, in dem das Richtungskriterium a nicht "wahr" ist. Die über z.B. m = 32 Meßwerte gemittelte (up-link) Empfangsfeldstärke $RXLEV\_UL_i$ muß kleiner als eine für die Verkehrszelle Z1 festgelegte Mindestempfangsfeldstärke $RXLEV\_MIN$ sein, nur dann ist das Kriterium "wahr".

Als Gleichung ergibt sich für das Kriterium

$$b = \frac{1}{m} \sum_{i=1}^{m} RXLEV\_UL_i.$$

Im Schritt 205 ist ein bereits ausführlich erläutertes Leistungskriterium PBGT (Power budget) angegeben, das erfüllt sein muß, d.h. es gibt eine "bessere" Zelle als die (momentane) Verkehrszelle Z1 (PBGT(n) > HO_MARGIN(n)).

Mit diesen drei Kriterien a, b, PBGT kann eine im Schritt 206 angegebene erfindungsgemäße Übergabebedingung HO überprüft werden, für die gilt H0=(a v b) PGBT. Ist diese Übergabebedingung HO erfüllt, d.h. "wahr", (Abfrage im Schritt 207) wird die Funkverbindung 2 zur Basisstation BTS2 übergeben, so daß wie im Schritt 208 angegeben eine Funkverbindung zwischen der Basisstation BTS2 und der Mobilstation MS besteht und die Zelle Z2 die Verkehrszelle ist. Ist die Übergabebedingung HO nicht erfüllt, werden die Schritte 202 bis 207 wiederholt (Schleifenschritt 209).

Wie aus der Übergabebedingungen HO ersichtlich ist, erfolgt eine Übergabe der Funkverbindung 2 nur dann, wenn das Leistungskriterium erfüllt und eines der beiden Richtungskriterien a, b erfüllt ("wahr") ist.

In dem zellularen Mobilfunksystem und in dem darin angewendeten Verfahren zur Übergabe der Funkverbindung 2 wird somit durch die Übergabebedingung HO der Zeitpunkt der Einleitung und Ausführung der Übergabe bestimmt. Die eigentliche Ausführung der Übergabe der Funkverbindung 2 erfolgt gemäß einer im GSM-Standard festgelegten Übergabeprozedur (s. z.B. Mouly, Kapitel 6.3.4).

## Patentansprüche

1. Zellulares Mobilfunksystem,

   - bei dem mindestens ein ortsbeweglicher Teilnehmer (MS) vorhanden ist, der eine Funkverbindung (2) mit einer ihm zugeordneten Funkfeststation (BTS1) einer Verkehrszelle (Z1) hat, wobei die Funkfeststation (BTS1) Teil eines Funkfestsystems ist,
   - bei dem die Funkfeststation (BTS1) der Verkehrszelle (Z1) regelmäßig eine Empfangsfeldstärke ($RXLEV\_UL_i$) des von dem ortsbeweglichen Teilnehmer (MS) ausgesendeten Funksignals bestimmt, und
   - bei dem der ortsbewegliche Teilnehmer (MS) regelmäßig Empfangsfeldstärken ($RXLEV\_DL_i$) von empfangenen Funksignalen bestimmt, deren Werte der ortsbewegliche Teilnehmer (MS) zur Funkfeststation (BTS1) der Verkehrszelle (Z1) sendet, aus denen das Funkfestsystem ein Leistungskriterium (PBGT) bestimmt,

   **dadurch gekennzeichnet , daß**
   die Funkfeststation (BTS1) der Verkehrszelle (Z1) eine Übergabe der Funkverbindung (2) an eine Funkfeststation (BTS2) einer Zielzelle (Z2) dann einleitet und ausführt, wenn die gemittelte Differenz von jeweils 2 der aufeinander folgender von der Funkfeststation (BTS1) der Verkehrszelle (Z1) regelmäßig bestimmten Empfangsfeldstärken ($RXLEV\_UL_i$) negativ ist und das Leistungskriterium (PBGT) erfüllt ist.

2. Verfahren zur Übergabe einer Funkverbindung (2) eines ortsbeweglichen Teilnehmers (MS),

   - bei dem sich der ortsbewegliche Teilnehmer (MS) in einem zellularen Mobilfunksystem bewegt und diese Funkverbindung (2) mit einer ihm zugeordneten Funkfeststation (BTS1) eine Verkehrszelle (Z1) hat, wobei die Funkfeststation (BTS1) Teil eines Funkfestsystems ist,
   - bei dem von der Funkfeststation (BTS1) der Verkehrszelle (Z1) regelmäßig eine Empfangsfeldstärke ($RXLEV\_UL_i$) des von dem ortsbeweglichen Teilnehmer (MS) ausgesendeten Funksignals bestimmt wird,
   - bei dem von dem ortbeweglichen Teilnehmer (MS) regelmäßig Empfangsfeldstärken ($RXLEV\_DL_i$) von empfangenen Funksignalen bestimmt werden, deren Werte von dem ortsbeweglichen Teilnehmer (MS) zur Funkfeststation (BTS1) der Verkehrszelle (Z1) gesendet werden, worauf im Funkfestsystem ein Leistungskriterium (PBGT) bestimmt wird,

   **dadurch gekennzeichnet, daß**
   eine Übergabe der Funkverbindung (2) an eine Funkfeststation (STS2) einer Zielzelle (Z2) von der Funkfeststation (BTS1) der Verkehrszelle (Z1) dann eingeleitet und ausgeführt wird, wenn die gemittelte Differenz von jeweils 2 der aufeinander folgender von der Funkfeststation (BTS1) der Verkehrszelle (Z1) regelmäßig bestimmten Empfangsfeldstärken ($RXLEV\_UL_i$) negativ ist und das Leistungskriterium (PBGT) erfüllt ist.

## Claims

1. Cellular mobile communication system,

   • in which at least one moving subscriber (MS) is present, which has a radio link (2) to a base transceiver station (BTS1) assigned to it in a serving cell (Z1), the base transceiver station (BTS1) being part of a base station subsystem,
   • in which the base transceiver station (BTS1) of the serving cell (Z1) regularly determines a received field strength ($RXLEV\_UL_i$) of the radio signal emitted by the moving subscriber (MS), and

• in which the moving subscriber (MS) regularly determines received field strengths ($RXLEV\_DL_i$) of received radio signals, whose values the moving subscriber (MS) sends to the base transceiver station (BTS1) of the serving cell (Z1), from which values the base station subsystem determines a performance criterion (PBGT),

**characterized in that**
the base transceiver station (BTS1) of the serving cell (Z1) initiates and executes a handover of the radio link (2) to a base transceiver station (BTS2) of a target cell (Z2), if the averaged difference between each pair of the successive received field strengths ($RXLEV\_UL_i$) determined regularly by the base transceiver station (BTS1) of the serving cell (21) is negative, and the performance criterion (PBGT) is satisfied.

2. Method for the handover of a radio link (2) of a moving subscriber (MS),

• in which the moving subscriber (MS) moves in a cellular mobile communication system and this radio link (2) with a base transceiver station (BTS1) assigned to it has a serving cell (Z1), the base transceiver station (BTS1) being part of a base station subsystem,
• in which a received field strength ($RXLEV\_UL_i$) of the radio signal emitted by the moving subscriber (MS) is regularly determined by the base transceiver station (BTS1) of the serving cell (Z1),
• in which the moving subscriber (MS) regularly determines received field strengths ($RXLEV\_DL_i$) of received radio signals, whose values are sent by the moving subscriber (MS) to the base transceiver station (BTS1) of the serving cell (Z1), whereupon a performance criterion (PBGT) is determined in the base station subsystem,

**characterized in that** a handover of the radio link (2) to a base transceiver station (BTS2) of a target cell (Z2) is initiated and executed by the base transceiver station (BTS1) of the serving cell (Z1), if the averaged difference between each pair of the successive received field strengths ($RXLEV\_UL_i$) determined regularly by the base transceiver station (BTS1) of the serving cell (Z1) is negative, and the performance criterion (PBGT) is satisfied.

**Revendications**

1. Système de radiotéléphonie mobile cellulaire,

- dans lequel il existe au moins un abonné mobile (MS) qui a une liaison radio (2) avec une station fixe de radiotéléphonie (BTS1) d'une cellule serveuse (Z1) qui lui est affecté, la station fixe de radiotéléphonie (BTS1) faisant partie d'un système fixe de radiotéléphonie,
- dans lequel la station fixe de radiotéléphonie (BTS1) de la cellule serveuse (Z1) détermine régulièrement une intensité du champ de réception (RXLEV_ULi) du signal de radiotéléphonie émis par l'abonné mobile (MS), et
- dans lequel l'abonné mobile (MS) détermine régulièrement les intensités du champ de réception des signaux de radiotéléphonie reçus, dont les valeurs sont envoyées par l'abonné mobile (MS) à la station fixe de radiotéléphonie (BTS1) de la cellule serveuse (Z1), à partir desquelles le système fixe de radiotéléphonie détermine un critère de performance (PBGT),

**caractérisé en ce que**
la station fixe de radiotéléphonie (BTS1) de la cellule serveuse (Z1) amorce et effectue alors une transmission de la liaison radio (2) à une station fixe de radiotéléphonie (BTS2) d'une cellule cible (Z2), si la différence moyenne de respectivement deux des intensités successives du champ de réception ($RXLEV\_UL_i$) régulièrement déterminées par la station fixe de radiotéléphonie (BTS1) de la cellule serveuse (Z1) est négative et si le critère de performance (PBGT) est satisfait.

2. Procédé de transmission d'une liaison radio (2) d'un abonné mobile (MS),

- dans lequel l'abonné mobile (MS) se déplace dans un système de radiotéléphonie mobile cellulaire et a cette liaison radio (2) avec une station fixe de radiotéléphonie (BTS1) d'une cellule serveuse (Z1) qui lui est affecté, la station fixe de radiotéléphonie (BTS1) faisant partie d'un système fixe de radiotéléphonie,
- dans lequel une intensité du champ de réception (RXLEV_ULi) du signal de radiotéléphonie émis par l'abonné mobile (MS) est régulièrement déterminée par la station fixe de radiotéléphonie (BTS1) de la cellule serveuse (Z1),
- dans lequel sont régulièrement déterminés par l'abonné mobile (MS) les intensités du champ de réception (RXLEV_DLi) des signaux de radiotéléphonie reçus, dont les valeurs sont envoyées par l'abonné mobile (MS) à la station fixe de radiotéléphonie (BTS1) de la cellule serveuse (21), après quoi un critère de performance (PBGT) est déterminé dans le système fixe de radiotéléphonie,

**caractérisé en ce que**

une transmission de la liaison radio (2) à une station fixe de radiotéléphonie (BTS2) d'une cellule cible (Z2) est alors commencée et effectuée par la station fixe de radiotéléphonie (BTS1) de la cellule serveuse (Z1), si la différence moyenne de respectivement deux des intensités successives du champ de réception ($RXLEV\_UL_i$) régulièrement déterminées par la station fixe de radiotéléphonie (BTS1) de la cellule serveuse (Z1) est négative et si le critère de performance (PBGT) est satisfait.

BSC

BTS 2

BSC

BTS1

2

1

MS

Zielzelle Z2'

Verkehrszelle Z1

4

3

FIG.1

EP 0 726 689 B1

$$\boxed{\begin{array}{c}\text{Funkverbindung (2) zw. BTS1 und MS} \\ \text{Zelle Z1 ist Verkehrszelle}\end{array}} \quad 201$$

$$\boxed{\begin{array}{c}\text{Feldstärkenbestimmung durch BTS1} \\ \text{(RXLEV\_UL) und durch MS (RXLEV\_DL)}\end{array}} \quad 202$$

203

$$a = \frac{2}{(n-1)n} \cdot \sum_{j=1}^{n-1} \sum_{i=j+1}^{n} (RXLEV\_UL_j - RXLEV\_UL_i) < \xi$$

204

$$b = \frac{1}{m} \sum_{i=1}^{m} (RXLEV\_UL) < RXLEV\_MIN$$

205

$$\boxed{\begin{array}{c}\text{Powerbudget} \\ \text{(PBGT)}\end{array}}$$

206

$$\boxed{HO = (a \lor b) \land PBGT}$$

207

$$\langle \text{Erfüllt?} \rangle \xrightarrow{\text{nein}} \quad 209$$

ja

208

$$\boxed{\begin{array}{c}\text{Funkverbindung zw. BTS2 und MS} \\ \text{Zelle Z2 ist Verkehrszelle}\end{array}}$$

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 602340 A

**In der Beschreibung aufgeführte Nicht-Patentliteratur**

- **BUCH VON MOULY, M. et al.** The GSM System for Mobile Communications. Eigenverlag, 1992

- **FRANCOIS DE ROULET.** Streckenfunk: Europas unterschiedliche Systeme. *ascom Technische Mitteilung,* 1991, vol. 3/4, 33-37